# EUROPEAN PATENT APPLICATION

(11) **EP 1 468 723 A1**
(43) Date of publication of application: **20.10.2004**
(21) Application number: 04009162.1
(22) Date of filing: 16.04.2004
(51) Int. Cl.: B01D 67/00, B01D 71/10

(54) **Crosslinked cellulosic membrane**

(30) Priority: 16.04.2003 US 414965
(71) Applicant: MILLIPORE CORPORATION, Billerica, Massachusetts 01821 (US)
(72) Inventor: Charkoudian, John, Carlisle Massachusetts 01741 (US); Puglia, John, Townsend Massachusetts 01469 (US)
(74) Representative: Henkel, Feiler & Hänzel

(57) **Abstract**

A membrane suitable for conducting macromolecular fluid separations (*e.g.*, protein filtration) is described. The membrane comprises crosslinked polymer formed by an acid catalyzed crosslinking reaction from a cellulosic polymer and a crosslinking agent. In a particular embodiment, the cellulosic polymer is one having substantial crosslinkable hydroxyl moiety content; and the crosslinking agent is one capable of releasing an electrophilic ion in an acidic solution, the electrophile capable of reacting with the hydroxyl moiety of the cellulosic polymer to effect the crosslinking thereof. Good results are obtained by using a multifunctional N-alkyloxy compound as the crosslinking agent.

## Description

### Field

In general, this invention relates to an improved ultrafiltration membrane useful for fluid separations and to a method for the manufacture thereof. More particularly, this invention relates to a crosslinked, cellulose-based ultrafiltration membrane well suited for, among other processes, biochemical fluid separations.

### Background

Research -- for example, in the life sciences, biopharmaceutical, and pharmaceutical fields -- continues to employ and fuel interest in fast, efficient, and inexpensive means for withdrawing particles, biopolymers, microorganisms, solutes, and like objects from protein-rich process streams for the purposes of protein purification, clarification, and/or recovery, as well as identification, detection, quantification, and/or like analytical objectives. Much scientific literature exists describing analytical tools and protocols capable of providing such functionality. However, precipitated particularly by the escalating importance of monoclonal antibody and cell culture processes to the production of biopharmaceutical drug products, much attention of late is focused on the investigation of membrane-based methodologies for filtering protein-rich fluids that are cost effective, comparatively easy to implement, and provide good and reliable results.

When utilizing a membrane for filtering a protein-rich biopharmaceutical solution, it is desirable that the membrane having sufficient hydrophilicity (and the other surface properties normally associated therewith) to prevent, frustrate, or otherwise minimize the binding or retention of protein thereto, and such that protein can be recovered from said solution with little loss, yet still effect good filtration.

Aside from hydrophilicity, a membrane used for protein fluid filtration should have a durability sufficient to withstand the physical, environmental, and chemical conditions and stresses typical of protein fluid processing. In particular, the membrane should not flake, crumble, erode or leach extractable materials during filtration and/or prior or subsequent washing or wetting steps. Protein fluid processing is typically conducted at elevated pressures, and often involves the use of somewhat caustic cleaning fluids and solvent.

Membranes used in the past for protein fluid filtration can be generally classified into two groups: *i.e.,* those made from cellulose and those made from polyethersulfone.

Polyethersulfone membranes are often well regarded for durability. Several types are available. Many are described in the patent literature: see *e.g.,* U.S. Pat. No. 5,869,174, issued to I. Wang on February 9, 1999; U.S. Pat., No. 4,976,859, issued to F. Wechs on December 11, 1990; and U.S. Pat. No. 6,056,903, issued to J.M. Greenwood *et al.* on May 2, 2000. Polyethersulfone membranes, however, are also known to have comparatively poor protein-binding properties. While surface modification processes are available to enhance the hydrophilicity of such membranes (thus rendering them more protein averse), the present invention departs from the pursuit of such processes, focusing instead on making more durable cellulose-based membranes, which are inherently hydrophilic.

Cellulose -- largely because of its hydrophilic protein-resistant properties - has a long history of use as a polymeric raw material for ultrafiltration membranes targeted for biopharmaceutical applications. Cellulose is a linear polysaccharide comprising repeating units of D-glucose linked by the β-glucoside bonds from the anomeric carbon of one unit to the C-4 hydroxy of the next. Varied derivative forms of cellulose exist, many of which are implemented in membrane manufacture.

Cellulose-based membranes are often well regarded for their low protein-binding characteristics - a feature important in many biopharmaceutical applications. Unfortunately, for certain applications, cellulose-based ultrafiltration membranes - if not otherwise modified - are sometimes physically weak and unstable.

Much effort has been directed towards improving the physical robustness and durability of cellulose-based membranes. One strategy involves crosslinking. See e.g., U.S. Patent No. 3,864,289, issued to J.L. Rendall on February 4, 1975; and European Patent App. 87310826.0, by T.C. Gsell (Pub. No. 272842AZ, June 29, 1988). While promising results seem attainable through this strategy, often any improvement in durability -- it is observed -- comes at the sacrifice of other chemical and/or surface properties. In this regard, it is noted that the low protein binding quality of cellulose is attributable to the polysaccharide's several hydoxy moities. Because crosslinking occurs at these moities, such protein repellant functionalities on the polysaccharide are exhausted with each such reaction. Thus, to the extent that crosslinking is used to make more robust and durable the cellulose membrane, the less resistant it becomes to protein binding.

Furthermore, prior to crosslinking, cellulose membranes in general have low alkali resistance. Crosslinking under techniques known to date exacerbate this nascent sensitivity; all such techniques - as currently known to the present inventor --- are conducted using alkaline solvents. The attack of alkalis on a cellulose hydrate membrane is characterized initially by shrinkage and swelling, and ultimately, the decomposition of the membrane.

Sensitivity to alkali is a disadvantage in biopharmaceutical applications, in part because cleaning solutions often used to revitalize membranes in such applications (*i.e.,* to restore the filtration capacity thereof after a period of use) are generally alkaline.

In light of the above, there is a need for a membrane modification that results in a hydrophilic, protein resistant surface that is durable (e.g., to temperature and physical stress), resistant to degradation by alkaline solutions, and which has a low level of material capable of being extracted therefrom whilst in use.

### Summary

In response to the aforementioned need, the present invention provides, in general, a membrane comprising a crosslinked polymer, the crosslinked polymer being formed by an acid catalyzed crosslinking reaction from a cellulosic polymer and a crosslinking reagent. In a particular embodiment, the cellulosic polymer is one having substantial crosslinkable hydroxyl moiety content; and the crosslinking agent is one capable of releasing an electrophilic ion in an acidic solution, the electrophile capable of reacting with the hydroxy moiety of the cellulosic polymer to effect the crosslinking thereof. The resultant membrane, *i.e.,* a crosslinked cellulosic membrane, possesses favorable hydrophilicity, durability, protein resistance, resistance to alkaline solutions, compactibility, compressibility, and flux. Surface charge, if desired, can be provided by covalently binding a charged moiety onto a surface of said layer of crosslinked polymer.

Surface-charge modification can be effected through either a one-step process or a two-step process.

The crosslinked cellulosic membrane of this invention in its principal embodiment is substantially hydrophilic, and hence, will essentially "wet" upon contact with water. In addition, such membranes manifest little or no protein binding. Since the membranes of this invention can accommodate either a positive or negative charge, they can be configured and used to isolate a wide variety of particles potentially present in protein-rich aqueous solutions.

In light of the above, it is a principal objective of the present invention to provide a crosslinked cellulosic membrane resultant of an acid catalyzed crosslinking reaction.

It is another object of the present invention to provide a crosslinked cellulosic membrane resultant of an acid catalyzed crosslinking reaction employing a multifunctional (*i.e.,* having more than one sterically unhindered reactive group) N-alkyloxy crosslinking agent.

It is another object of the present invention to provide a crosslinked cellulosic membrane that does not substantially change in average pore size as a result of temperature fluctuations, particularly temperatures above ambient room temperature.

It is another object of the present invention to provide a crosslinked cellulosic membrane suitable for use in the ultrafiltration processes typical of or common in industrial biopharmaceutical manufacture.

It is another object of the present invention to provide a cellulosic ultrafiltration membrane capable, in the context of biopharmaceutical manufacture, of being autoclaved and sterilized with steam, and "regenerated" with alkaline cleaning agents whilst retaining good durability and functionality (*e.g.*, flux).

It is another objective of the present invention to provide a crosslinked porous cellulosic film that is structurally stable under elevated temperatures, resistant to alkaline solutions, has low extractable content, and has a low affinity for protein.

It is another objective of the present invention to provide a hydrophilic ultrafiltration membrane having a charged surface which largely retains the ultrafiltration capacity of the base charge-unmodified membrane.

It is another objective of the present invention to provide a porous cellulosic film made through a comparatively non-degrading modification process involving crosslinking under acidic conditions of the film's cellulosic constituents.

For a fuller understanding of the nature and objects of the present invention, the following detailed description should be considered in conjunction with the accompanying illustrative examples.

### Brief Description of the Drawings

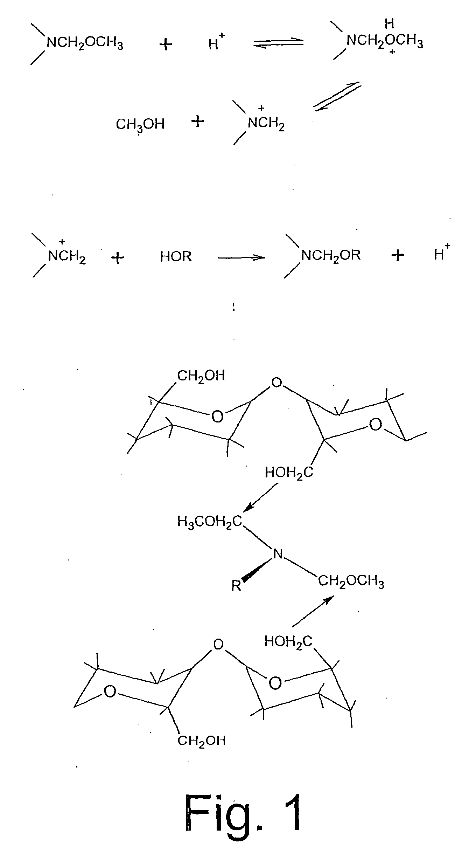

Fig. 1 illustrates chemical reactions felt to underlie a method for manufacturing a crosslinked cellulosic membrane according to an embodiment of the present invention, the details of said method being more fully described, for example, in Example 5, *infra.*

### Detailed Description

The present invention provides a membrane suitable for, among other things, conducting macromolecular fluid separations (*e.g.*, the filtration of protein). The membrane comprises a crosslinked polymer formed from a cellulosic polymer and an acid-activatable crosslinking agent. The cellulosic polymer has substantial crosslinkable hydroxy moiety content. The crosslinking agent is capable of releasing an electrophilic ion in an acidic solution, the electrophilic ion being one capable of reacting with the hydroxy moiety of the cellulosic polymer to effect crosslinking thereof. The membrane is durable and will not bind protein excessively.

The membrane of the present invention is made from a base cellulosic membrane (made or commercially obtained) that is soaked in or otherwise treated with a crosslinking solution, and cured. The basic morphology (e.g., dimensions, shape, etc.) of the finished crosslinked cellulose membrane remain (under normal un-aided human observation) comparatively the same as that of the base uncrosslinked cellulose membrane. If the initial base (and/or intermediate) material possessed a granular, sintered, fibrous, or other morphology, then it should essentially remain as such in the finished product. Of course, closer inspection (such as by chemical analysis, light scattering analysis, and microscopy) should reveal the tell-tale indicia of the crosslinking treatment, such as its comparatively more rigid structure (which will manifest a comparatively enhanced resistance to swelling) and the presence of the characteristic optical signatures of its crosslinks. Such methods can be used to determine the presence of crosslinking. Other methods may be needed to determine and/or confirm the species of crosslinker used.

Thickness, density, plasticity, and such other physical attributes will depend on the basic cellulose membrane employed. In its broadest sense, the present invention is not intended to be limited to any such physical characteristics.

Although one can consider morphology in characterizing the invention, perhaps a better consideration is that of porosity. The porosity of the base cellulose membrane, prior to its crosslinking, can be quite varied. Cellulose membranes are offered and/or are available in a wide range of pore sizes, *i.e.,* from so-called "clarification" grade (which is approximately in the 10-100 micron range), to so-called "microfiltration" grade (which is approximately in the .1 to 1 micron range), to so-called "ultrafiltration" grade (which is generally less than approximately .1 micron). It is envisioned that all such cellulosic membranes, regardless of the their average pore size, can benefit in one application or another by the acid-catalyzed crosslinking process described herein.

Special attention, however, is given to ultrafiltration membranes. As indicated in the background section, ultrafiltration membranes are customarily employed for biopharmaceutical separations involving protein-rich fluids, the ultrafiltration pore size being more appropriately matched to the typical particle size ranges encountered in such applications. And, as also mentioned above, it is biopharmaceutical separations wherein protein binding and alkaline wash deterioration are pressing issues.

As to such ultrafiltration-type cellulosic membranes, the treatment of the base cellulosic starting material with an acid-catalyzed crosslinker according to the present invention produces a finished product having a final porosity only slightly different from the starting porosity. Substantially less than that realized in the prior art, this good flux performance is significant for biopharmaceutical separation. Flux -- an indirect measure of porosity wherein liquid throughput is measured over time per area of membrane -- should be large, else production may be too slow for commercial use.

Though slight, flux does diminish. Accordingly, where performance requirements are strict and unyielding, one should forecast and accommodate for any such diminishment to obtain the desired final pore size. The examples provided, *infra,* should provide skilled artisans with insight into the extent at which diminishment occurs. For biopharmaceutical separations, membranes having a final average pore size of from approximately .02 to approximately 10 microns are generally desirable.

The inventive cellulosic membrane's pore configuration can be either symmetric or asymmetric. In an asymmetric configuration, the average pore size on one surface of the membrane is markedly different from the average pore size on the opposing surface, with a gradual or stepwise transition through the bulk of the membrane. In a symmetric configuration, the pore size remains constant throughout essentially the entire bulk of the membrane. For biopharmaceutical separations, an asymmetric configuration can lead to better flux-owing in part to its more "open" structure-white maintaining good and/or acceptable retentivity.

While the present invention is not limited to any theory used in its explanation herein, it is believed that the beneficial properties afforded the membrane by its treatment with the acid-catalyzed multifunctional N-alkyloxy crosslinker can be traced to the occurrence of the crosslinking in a non-degrading acidic environment. In the prior art, crosslinking was generally conducted in an alkaline solution, and accordingly was accompanied by the degradative effect of alkaline hydrolysis of the cellulose substrate. Although other factors may be at play, at present, the comparatively benign acid chemistry that underlies the crosslinking process is felt to be a primary determinant of membrane durability herein.

The base cellulosic material of the present invention can be formed from any of the known cellulose film formers, including various cellulose acetates (*e.g.*, cellulose diacetate, cellulose acetate, and cellulose acetate butyrate), cellulose butyrate, cellulose acetopropionate, cellulose nitrate, ethyl cellulose, and other esters and ethers of cellulose. This list of cellulosic material is only representative and is not meant to be limiting in any way. Blends of cellulosic materials can also be used.

Aside from cellulose, base membranes made from other polysaccharides (such as agarose) can likely also be crosslinked in an acidic solution using in particular a multifunctional N-alkyloxy crosslinking agent as defined herein. While all advantages are not currently known, such treatment should yield at the least a polysaccharide membrane of greater durability.

The presently preferred base cellulose membranes are those made from regenerated cellulose. Regenerated cellulose is formed by the precipitation of cellulose from solution, *see e.g.*, "Kirk-Othmer Encyclopedia of Chemical Technology, Third Edition", Vol. 5, pg. 70-163, J. Wiley & Sons (1979). A regenerated cellulose membrane can exist in different forms. They may contain 100% regenerated cellulose or a mixture of regenerated cellulose and at least one other type of material (for example, virgin cellulose, synthetic fibers, synthetic filaments, *etc*.)

The base cellulosic membrane used for the present invention can be "skinned" or "unskinned". A skin is a relatively thin, dense, surface layer integral with the substructure of the membrane. In skinned membranes, the skin accounts for most resistance to flow through the membrane. In both microporous and ultrafiltration membranes, the surface skin, where present, contains pores leading from the external surface to the continuous porous structure of the membrane below the skin. For skinned microporous and ultrafiltration membranes, the pore represents a minor fraction of the external surface area. In contrast, an unskinned membrane will be porous over the major portion of the external surface. The external surface porosity of the membrane (*i.e.,* the arrangement of pores of the external surface of the membrane as viewed by, for example, scanning electron microscopy) can be single pores that are evenly distributed on the external surface of the membrane, or can be discrete areas of porosity, or mixtures thereof. Surface porosity as applied to an external surface of the membrane is the ratio of the area defined by the pore openings of the external surface to the total surface area of the external surface.

As stated, the inventive membrane is made by crosslinking a base cellulose membrane in non-degrading acidic media. The non-degrading acidic media-*i.e.,* the crosslinking solution-will typically comprise a crosslinking agent (monomeric or oligomeric) and an acid catalyst. In order to effect the type of crosslinking envisaged here, the crosslinking agent must be capable of releasing or otherwise presenting an electrophilic ion in an acidic solution, wherein the electrophilic ion is capable of reacting with the hydroxy moieties of the cellulosic polymer to effect crosslinkages therebetween. A group of crosslinking agents providing such functionality are multifunctional N-alkyloxy crosslinking agents. A suitable N-alkyloxy crosslinking agent may either be aromatic or non-aromatic, with "N-" being either endocyclic or exocyclic.

The preferred crosslinking agents for the present invention are multifunctional N-methyl methoxy compounds, such as Cymel 385 and Powderlink 1174, which release an electrophilic ion (*e.g.*, a carbonium ion) in acidic solution, the ion reacting with the hydroxy groups on cellulose, resulting in cross-linkage. See Fig. 1. They are "multifunctional" in the sense that they contain more the one sterically-unhindered, reactive group, *e.g.*, a pendant carboxy group. More desirably, the crosslinking agent should have three or more functional reactive sites, which will afford more geometrically-stable crosslinkage, and thereby impart greater structural rigidity and resistance to compaction and compression.

Cymel 385-a specific preferred crosslinking agent--is a methylated melamine-formaldehyde resin with a low degree of alkylation, is available from Cytec Industries of West Patterson, New Jersey, and has the following structural formula: 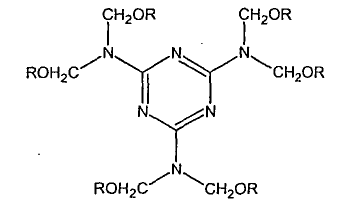 wherein, R is methyl (*i.e.,* in the case of Cymel 385), but can be other alkyls.

Powderlink 1174 resin--another specific preferred crosslinking agent--is a highly monomeric aminoplast resin comprising predominantly tetramethoxymethyl glycouril, is also available from Cytec Industries, and has the following structural formula: 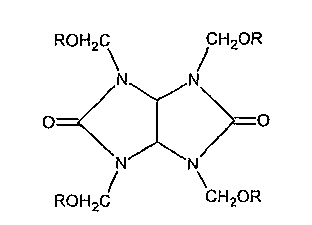 wherein, R is methyl (*i.e.,* in the case of Powderlink 1174), but can be other alkyls.

Both Powderlink 1174 and Cymel 385 resin will crosslink cellulose at its hydroxyl moieties in the presence of an acid catalyst, such as a sulfonic acid. Most desirably, it is intended that the crosslinking reaction (as shown generically in Fig. 1) take place under weak to moderately acidic conditions, *e.g.*, pH of approximately, 2 to 4. Types of catalysts operative under such acid condition are well known. The presently preferred acid catalyst is Cycat 4040, a toluenesulfonic acid catalyst also available from Cytec Industries. More strongly acidic conditions - *e.g.,* pHs of approximately 1 to 2 - are envisioned, but acid decomposition may become an issue.

The typical crosslinking formulation applied onto the cellulose membrane base is an aqueous solution (*e.g.*, water, methylethylketone, methylpentanediol, acetone, methyl or ethyl ketone, *etc.*) into which is dissolved the multifunctional monomeric or oligomeric crosslinking agent and the acid catalyst. It is this formulation that is applied to the base cellulosic membrane (for example, by spraying, immersion, washing, convective or diffusive imbibition, *etc.*), the treated membrane being subsequently subjected to the conditions effecting crosslinking (for example, exposure to elevated temperatures or actinic radiation).

Although specific multifunctional monomeric crosslinkers and acid catalysts are mentioned herein, the present invention is not limited to such specific agents. Rather, it should be kept in mind that these are used herein because they produce the desired effect, *i.e.*: crosslinking of the base cellulose membrane in an acidic environment. Although N-alkyloxy or N-methylmethoxy crosslinkers that function as such can possibly also be used, the resulting crosslinked cellulose membrane may not all have identical technical and/or commercial applicability. In screening other specific potential candidates for use as the crosslinker (and acid catalyst), factors for consideration include hydrolytic stability, rate of reaction, and molecular rigidity.

The concentrations in which the crosslinker monomer and acid catalyst are used will vary depending on the properties sought in the final cellulose membrane. In general, however, the monomer by total weight comprises between approximately 2% and 10% of the solution, with the catalyst present in fractionally smaller quantities. The concentration of the monomer and acid catalysts will have an effect on the length and conduct of the reaction, as does other factors, such as temperature.

In the preparation of membrane embodiments for the types of biopharmaceutical applications presently contemplated for the invention (*e.g.*, protein-rich fluid separations), the balance between "too much" and "too little" is a constant consideration. Excessive crosslinking can yield a product with unacceptably diminished flux. The pores of a treated membrane can become excessively occluded as a result of crosslinking. On the other hand, insufficient crosslinking yields a product that differs not too much from the starting product. The selection of the appropriate middle ground is left to those skilled in the art in view of their own particular needs.

It is envisioned that the raw cellulosic material will be obtained commercially or from a membrane manufacturer's existing stock of basic materials, rather than being manufactured from scratch, although the later is certainly not excluded.

Several producers and/or distributors of cellulosic membrane products and their products are known. For example, Millipore Corporation of Bedford, Massachusetts, currently manufactures and sells mixed cellulose ester (nitrate and acetate) membranes, in pore sizes ranging from 0.025 to 8 microns, under the tradename "MF-Millipore", and regenerated cellulose membranes, in a range of ultrafiltration-appropriate pore sizes, under the tradename "Ultracell". Sartorious AG of Goettingen, Germany, sells cellulose acetate membranes, in pore sizes ranging from .2 to .8 microns, under their catalog designation "Type 111"; regenerated cellulose membranes, in pore sizes ranging from .2 to .45 microns, under their catalog designation "Type 184"; and cellulose nitrate membranes, in pore sizes ranging from .1 to .8 microns, under their catalog designation "Type 113". Pall Corporation of East Hills, New York, sells a "pure cellulose membrane", in pore sizes ranging from 8 to 35 microns, under the tradename "PallCell". The Whatman Company of the United Kingdom, offers mixed ester cellulose membranes having a broad pore size distribution (*i.e.,* .22 to 5.0 microns). These and other commercially-available cellulose membranes may either serve as the raw material for the present invention, or can be re-engineered (for example, by their manufacturers) to incorporate the innovative elements described herein. In the examples below, "Ultracell" membranes produced by Millipore Corporation are employed as the underlying base membrane material.

If a custom-made base membrane is sought, those skilled in the art have available to them several well-known technical treatises describing methods for membrane manufacture.

Regardless, as to ultrafiltration-single grade membranes, these can form by immersion casting of a cellulose acetate polymer solution onto a non-woven fabric substrate formed for example from polyethylene or polypropylene. The casting operation is regulated so that the thickness of the cast membrane typically is on the order of about 100 microns. The cast membrane may remain in contact with the atmosphere for approximately one minute to permit solvent to evaporate and thereafter immersed in water at a temperature of about 1°C, where it remains for a sufficient time to set up and remove unevaporated solvent by diffusion into water

The non-woven substrate has relatively large pores, typically, in the order of several hundred microns in effective diameter in comparison to the ultrafiltration layer formed on it. The ultrafiltration layer is typically bound to some degree to the substrate by mechanical interlocking of the ultrafiltration layer and the substrate. The cellulose acetate is then hydrolyzed to cellulose by using a strong base, such as 0.5N NaOH.

Alternatively, cellulose can be dissolved in a solution of solvents such as dimethylacetamide or N-methyl pyrrolidone with the addition of a salt such as lithium chloride. The cellulose solution can be used to form the composite membrane and subsequently eliminate the need for base hydrolysis.

Specific details of methods suitable for making the starting cellulose ultrafiltration membrane -- such as those employed in the examples, *infra,* can be found, for example, in U.S. Pat. No. 5,522,991, issued to R. Tuccelli *et al.* on June 4, 1996.

Cross-linking with respect to the specific type of base membrane used in the examples, should be conducted at a temperature range of about 25 to about 90°C. Reaction time can depend on the applications intended for the reacted membrane. In general, time on the order of about 4 hours would be typical. Clearly, at any given temperature, a longer reaction time will result in a denser, more extensive crosslinking of the membrane's cellulosic polymer. An increase in the degree of cross-linking normally results in an increase in membrane rejection (*i.e.,* increase selectivity) of a given solute/solvent system leading to an accompanying decrease in flux. As suggested above, excessive cross-linking can result in an unacceptable loss of flux and may even render the membrane undesirably fragile or brittle.

If desired, the surface charge of the inventive crosslinked cellulose membrane can be modified to add or amplify either a negative or positive charge. Surface charge modification can be effected either through a one-step process or a two-step process.

In the one step process, the crosslinked cellulose membrane is reacted with a reagent that can combine with residual hydroxi moities still available on the cellulosic polymer (as well as any "open" binding sites on the multifunctional crosslinker) under conditions to form a positively or negatively charged ionic group. Representative suitable reagents for forming a positively charged ionic group include compounds of the formulae:

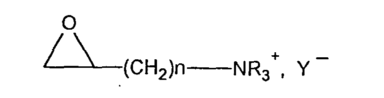

X―(CH₂)n―NR₃ ⁺, Y⁻

wherein X can be halogen such as chlorine or bromine, Y is an anion, the R's can be the same or different and are alkyl from 1 to 5 carbon atoms and n is 0 or an integer of 1 to 5. It is preferred to utilize reagents where n is 1 since these reagents minimize change in hydrophilicity of the substrate membrane. Representative suitable reagents include glycidyl trimethylammonium chloride, (2-chloroethyl) trimethylammonium chloride and (3-bromopropyl) trimethylammonium chloride or the like.

Representative suitable reagents for forming a negatively charged ionic group include compounds of the formula X(CH₂)ₙA or alkali metal salts thereof, wherein n is an integer of 1 to 5, X is halogen and A is carboxyl or sulfonate. It is preferred to utilize reagents wherein n is 1 since these reagents minimize change in hydrophilicity of the substrate membrane. Representative suitable reagents include sodium chloroacetate, 3- chloropropionic acid, haloalkyl acids, 2- chloroethyl sulfonate or the like.

In the one-step process, the surface modification reaction is done under conditions of time, temperature, pH, and reagent concentration suitable for retention of the ultrafiltration properties of the substrate membrane, yet still produce the desired surface charge. Higher temperatures, longer. reaction times, and/or higher reagent concentrations promote increased membrane substrate modification. Therefore, these conditions are balanced to obtain the desired membrane modification, while retaining the ability of the modified membrane to function as an ultrafiltration membrane. For example, reagent concentrations can range from about 1 to 40 % concentration. Reaction times can vary from about 1 minute to about 24 hours. Reaction temperatures can range from about 25°C up to about the boiling point of the reagent.

In the two-step process, the base cellulose membrane is reacted in a first step with an acid-activated multi-functional crosslinking agent that binds to the hydroxyl groups of the cellulosic polymer under conditions that effects cross-linking of the polymer, the crosslinking agent having a moiety not involved in crosslinking. but is specifically reactive with a second reagent that produces an ionic group upon reaction with the second reagent. In the second step, the crosslinked polymer is reacted with the second reagent, the second reagent binding preferentially to the polymeric membrane at the crosslinkages.

In the two-step process, suitable second reagents for forming positively charged ultrafiltration membranes include reagents having a nucleophilic group, including monoamines, diamines, compounds having a sulfhydryl group or an alkoxide group. Representative suitable reagents having a nucleophilic group include trimethylamine, ethylenediamine, and N-dialkylalkylenediamines, such as N-dimethylethylenediamine and the like.

In the two-step process, representative suitable reaction conditions for the second reaction are those set forth above for the one step process *i.e.,* conditions which retain and/or otherwise safeguardextant ultrafiltration properties of the base membrane, yet still form the modified membrane.

### Examples

The following examples, while illustrating further the invention, are not intended to limit the same.

### Example 1

A 10% solution of glycouril, *i.e.,* Powderlink 1174 (available from Cytec Inc., of West Patterson, New Jersey), is prepared by dissolving 10 grams of the solid in 89.2 grams of water. A catalytic quantity (*i.e.,* 0.80 grams) of Cycat 4040 toluenesulfonic acid catalyst is added to the solution.

A composite regenerated cellulose membrane having a Nominal Molecular Weight Limit (NMWL) of 5 kDa is obtained, *i.e.,* Millipore "Ultracell" PLCCC. The composite regenerated cellulose membrane -- which serves as the base membrane -- comprises a porous layer of regenerated cellulose cast onto a microporous polyethylene substrate.

The base membrane is pre-wet with isopropyl alcohol and "solvent exchanged" into water. The base membrane is treated with the 10% Powderlink 1174 solution by gently rolling the base membrane in a jar containing the crosslinking solution for 4 hours at 90°C. The resultant crosslinked membrane was washed with water 3 times.

Samples of crosslinked membrane and un-crosslinked base membrane (*i.e.,* control samples) are evaluated for permeability and dextran rejection.

The flux of an un-crosslinked base membrane was 1.1 Imh/psi. The flux of an crosslinked membrane was 0.8 Imh/psi. The R90 -- *i.e.,* the molecular weight of the dextran molecule wherein 90% are excluded by the membrane --- of an un-crosslinked base membrane was 3.7 kDa. The R90 of a crosslinked membrane was 3.1 kDa.

After treatment with 1 M NaOH for 30 hours at room temperature, the R90 of an un-crosslinked base membrane increased to 7.0 kDa and the flux increased to 2.38 Imh/psi. This data suggest that cellulose pores enlarge under the influence of NaOH. Under the same alkaline conditions, a crosslinked membrane -- presenting much more resilience -- had an R90 of 4.7 kDa and a flux of 2.09 Imh/psi.

### Example 2

In a manner similar to Example 1, a water-filled composite regenerated cellulose membrane (*i.e.,* Millipore "Ultracell" PLC 10-K) is treated with a 7.5% Powderlink 1174 aqueous solution containing 0.8% Cycat 4040 catalyst for 3 hours at 88°C. The composite membrane comprises a regenerated cellulose membrane cast onto a microporous polyethylene substrate and has a Nominal Molecular Weight Limit (NMWL) of about 10 kDa.

Samples of crosslinked membrane and un-crosslinked base membrane (*i.e.,* control samples) are evaluated for dextran rejection.

The dextran rejection data gives an R90 value of 6.1 kDa for the crosslinked membrane and 6.6 kD for an un-crosslinked base membrane.

Samples of crosslinked membrane and un-crosslinked base membrane were treated with 1M NaOH for 30 hours at room temperature. The un-crosslinked base membrane had an R90 of 9.6 kDa after exposure to NaOH, while the crosslinked membrane remained relatively stable with an R90 of 6.6 kDa.

### Example 3

Cellulose membranes are known to compress under pressure. Compression -- which often occurs as transmembrane pressure is raised during filtration -- often leads to a decrease in permeability. For example, the flux measured at 5 psi per unit applied pressure will be greater than the flux measured at 25 psi per the same unit of applied pressure.

To evaluate the effect of pressure on a crosslinked membrane made according to the present invention, base membranes with comparatively large NMWL (*i.e.,* in the range of 300 kDa) are crosslinked in acid with N-methylmethoxy crosslinker. In particular, the crosslinking solution is prepared by dissolving 5 grams of Powderlink 1174 in methylpentanediol. The base membrane is a composite regenerated cellulose membrane having a Nominal Molecular Weight Limit (NMWL) of 300 kDa is then obtained, *i.e.,* Millipore "Ultracell" PLCZK, and comprises a porous layer of regenerated cellulose cast onto a microporous polyethylene substrate.

The crosslinking solution, when applied, completely wets the base membrane. The base membrane was rolled in a jar containing with the solution for 4 hours at 75°C.

After washing the resultant crosslinked membrane, the flux is measured at 5, 25, and 50 psi applied pressure. Un-crosslinked sample is also tested. In all cases, the crosslinked membranes displayed less flux decay under increasing applied pressure. The improvement, compared to the performance of the un-crosslinked base membrane, ranged from 25-40%.

### Example 4

A crosslinker solution of a melamine-formaldehyde resin, *i.e.,* Cymel 385 (available from Cytec Inc., of West Patterson, New Jersey), is prepared by dissolving the solid (at 4% by weight) in methylpentanediol. A catalytic quantity (i.e. 0.2% by weight) of Cycat 4040 toluenesulfonic acid catalyst is then added to the solution.

A base composite regenerated cellulose membrane having a Nominal Molecular Weight Limit (NMWL) of 300 kDa is obtained, *i.e.,* Millipore "Ultracell" PLCZK. The composite regenerated cellulose membrane -- which serves as the base membrane -- comprises a porous layer of regenerated cellulose cast onto a microporous polyethylene substrate.

The base membrane is treated with the crosslinker solution by gently rolling the base membrane in a jar containing the solution for 1 hour at 75°C. After washing, the flux of crosslinked and un-crosslinked membrane was measured at 5 and 25 psi. The flux of the un-crosslinked membrane decreased 24% at the higher pressure, whereas the flux of the crosslinked membrane decreased only 11%.

### Example 5

A base cellulose membrane having an NMWL of 10 kDa is crosslinked using a 5% solution of the melamine-formaldehyde resin, Cymel 385. The base cellulose membrane (*i.e.,* Millipore "Ultracell" PLGCC) comprises a porous layer of regenerated cellulose cast onto a microporous polyethylene substrate. The reaction time and temperature were 2.5 hours at 75°C. The reaction is illustrated schematically in Fig. 1. The flux of the base membrane was about 8 Imh/psi. After crosslinking, the flux was about 4 Imh/psi. The R90 of the base membrane was about 10,200. After crosslinking, the R90 was 10,500. Crosslinked membrane is placed in 1 M NaOH at 40°C for 30 hours. The flux of the crosslinked membrane was about 5 Imh/psi, and the R90, was 10,360. Essentially, no significant change occurs at R90.

While only a few illustrative embodiments of the present invention have been discussed, it is understood that various modifications will be apparent to those skilled in the art in view of the description herein. All such modifications are within the spirit and scope of the invention as encompassed by the following claims.

## Claims

1. A membrane comprising a crosslinked polymer, wherein: the crosslinked polymer is formed from a cellulosic polymer and a crosslinking agent, the cellulosic polymer having crosslinkable hydroxyl moieties, and the crosslinking agent capable of releasing a electrophilic species in ah acidic solution, said electrophile capable of reacting with the hydroxyl moiety of said cellulosic polymer to effect crosslinking of said cellulosic polymer.

2. The membrane of claim 1, wherein said crosslinking agent is a multi-functional aromatic or non-aromatic cyclic N-alkyloxy compound or alkyl ether of said N-alkyloxy compound, and wherein N- is endocyclic or exocyclic.

3. The membrane of claim 2, wherein said crosslinking agent is a multi-functional N-methylmethoxy compound or an alkyl ether of said multi-functional N-methylmethoxy compound.

4. The membrane of claim 3, wherein said crosslinking agent has the formula: 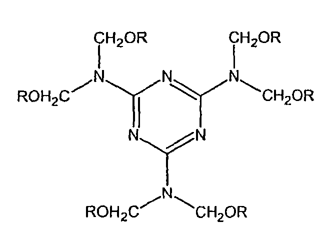 wherein, R is alkyl group.

5. The porous synthetic membrane of claim 3, wherein said crosslinking agent has the formula: 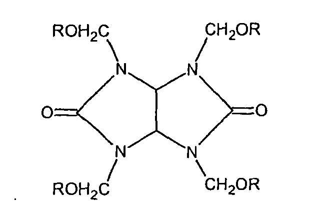 wherein, R is an alkyl group.

6. The membrane according to any one of claims 1 to 5, wherein said membrane has a configuration suited for ultrafiltration.

7. The membrane according to any one of claims 1 to 6, wherein said cellulosic polymer is regenerated cellulose.

8. The membrane according to any one of claims 1 to 7, further comprising a porous polymeric substrate, said porous polymeric substrate supporting said crosslinked polymer, the porosity of said porous polymeric substrate being greater that the porosity of said crosslinked polymer.

9. The membrane according to any one of claims 1 to 8, further comprising a charged moiety covalently bound to a surface of said crosslinked polymer, wherein said charged moiety is a negatively charged moiety.

10. The membrane according to any one of claims 1 to 8, further comprising a charged moiety covalently bound to a surface of said crosslinked polymer, wherein said charged moiety is a positively charged moiety.

11. The membrane according to any one of claims 1 to 10, wherein said porous layer of crosslinked polymer has a front surface and a back surface, the average pore size of said front surface being greater or larger that the average pore size of said back surface.

12. A membrane comprising a crosslinked polymer, wherein: the crosslinked polymer is formed from a polysaccharide and a crosslinking agent, the polysaccharide having crosslinkable hydroxyl moieties, the crosslinking agent being a multi-functional aromatic or non-aromatic N-alkyloxy compound, or alkyl ether of said N-alkyloxy compound, and wherein N- is endocyclic or exocyclic.
